# FASCICULE DE BREVET EUROPEEN

(11) **EP 2 620 084 B1**
(45) Date de publication et mention de la délivrance du brevet: **19.11.2014**
(21) Numéro de dépôt: 13152190.8
(22) Date de dépôt: 22.01.2013
(51) Int. Cl.: A47J 31/44

(54) **Dispositif pour évacuer l'agglomérat présent dans la cavité d'un ustensile tel qu'un compartiment d'infusion d'une machine à café**
Vorrichtung zum Evakuieren von einem in einem Hohlraum eines Gerätes, wie z.B. einer Brühkammer einer Kaffeemaschine, vorhandenem Agglomerats
Device for the evacuation of agglomerate present in the cavity of a utensil such as a brewing compartment of a coffee machine

(30) Priorité: 25.01.2012 LU 91936
(43) Date de publication de la demande: 31.07.2013
(73) Titulaire: De Bastos Almeida, Artur, 9570 Wiltz (LU)
(72) Inventeur: De Bastos Almeida, Artur, 9570 Wiltz (LU)
(74) Mandataire: Lecomte & Partners

(56) Documents cités:
- EP-A2- 1 803 380
- WO-A1-2009/127983
- FR-A1- 2 840 521

## Description

### Domaine technique

L'invention a trait à l'évacuation d'agglomérat présent dans la cavité d'un ustensile tel qu'un compartiment d'infusion d'une machine à préparer des boissons chaudes. L'invention a trait à un dispositif conçu pour évacuer cet agglomérat. De manière plus particulière, l'invention a trait à un dispositif permettant d'évacuer l'agglomérat d'infusion résultant de la préparation d'une boisson chaude, plus particulièrement permettant d'évacuer le café aggloméré dans un compartiment d'infusion d'une machine à café.

### Technique antérieure

Certains modes de préparation de boissons consistent à infuser de l'eau sur une substance qui forme un milieu perméable. Dans le cas de la préparation de café, de l'eau bouillante ou de la vapeur d'eau traverse une dose de café moulu pour en extraire les arômes. Après usage, la dose de café doit être évacuée du compartiment dans lequel il était confiné avant qu'un autre café ne puisse être préparé. Or, après le contact avec l'eau et/ou la pression, la dose de café s'agglomère et adhère aux surfaces du compartiment. Un effort et un soin particulier sont nécessaires pour vider et nettoyer le compartiment. La difficulté à évacuer la dose de café augmente dans les cas où il a été préalablement compacté avant infusion, car l'agglomérat formé montre une cohésion accrue.

La forme du compartiment ou du porte-filtre complique encore l'opération d'évacuation. Ce dernier peut former une cavité cylindrique dont la profondeur réduit l'efficacité d'extraction du café.

L'art antérieur propose des solutions permettant d'extraire une dose de café comprimée après infusion.

Le document GB812833 présente un dispositif permettant de vider un compartiment d'infusion de machine à café après usage du café. Suite à la réalisation d'une dose de café, le compartiment d'infusion est conduit automatiquement sous une vis. Toujours de manière automatique, cette vis s'introduit dans le compartiment d'infusion et enlève dans un mouvement de rotation le café usagé. La vis est logée dans un caisson qui permet de stocker le café usagé après extraction.

Cette solution permet de récupérer une partie du café usagé. Néanmoins, en raison de l'orientation du filetage de la vis, une partie du café usagé risque de retomber dans le compartiment d'infusion. L'angle formé par le filetage de la vis, en particulier à proximité de l'axe de rotation, est trop faible pour retenir le café. Le dispositif permet d'extraire du café mais pas de l'évacuer définitivement. Le caisson doit en outre être vidé régulièrement pour éviter les bourrages et pour préserver la capacité de la vis à retenir du café extrait. Le caisson doit être vidé dès qu'un niveau de remplissage critique est atteint.

Le document FR2225126 décrit un appareil servant à préparer une infusion. Cet appareil a la capacité de vider le compartiment d'infusion et de nettoyer une paroi perforée jouxtant le compartiment en question. Le compartiment est monté sur un bras articulé. Dans un mouvement de retournement, le compartiment est stoppé par une butée qui génère un choc de nature à décoller en bloc le marc de café. La paroi perforée est mobile en translation. Dans son mouvement de translation, elle vient se frotter contre une brosse transversale. Les poils de la brosse peuvent s'insérer dans les recoins de la paroi perforée pour en extraire le moindre grain de café. La brosse peut évacuer chaque reste de café moulu même lorsque la paroi est une grille. La cinématique de retournement du compartiment d'infusion permet avantageusement de le vider en une opération sans que du café ne puisse retomber dedans. Cette solution offre une certaine efficacité à vider une cavité d'une part, et d'autre part à nettoyer une paroi, mais ne permet pas de combiner ces deux effets sur une même surface. Cette solution ne permet pas de nettoyer les parois intérieures du compartiment d'infusion, si bien que des traces de café moulu peuvent subsister. Par ailleurs, le café peut être particulièrement comprimé avant infusion, ce qui peut créer un bloc extrêmement compact et adhésif. Il devient par conséquent dur à évacuer. Une solution serait d'augmenter la violence du choc de fin de course du retournement du compartiment, mais cette solution pourrait générer d'autres contraintes mécaniques et gênes acoustiques. Les restes de café peuvent à la longue s'additionner obstruant progressivement le volume utile du compartiment d'infusion.

Le document EP 1 803 380 A2 montre un autre dispositif de l'art antérieur.

### Résumé de l'invention

### Problème technique

L'invention a pour objectif de résoudre au moins un des problèmes mentionnés dans l'art antérieur. L'invention a pour objectif de proposer une solution simple, efficace et économique à l'évacuation d'un agglomérat formé dans la cavité d'un ustensile tel qu'un compartiment d'infusion d'une machine à préparer des boissons par infusion. Plus particulièrement, l'invention a pour objectif de proposer une solution écologique à l'évacuation de l'agglomérat en question.

### Solution technique

L'invention a pour objet un dispositif d'évacuation d'un agglomérat présent dans la cavité d'un ustensile tel qu'un compartiment d'infusion de machine à café, comprenant : un support et une tête apte à fragmenter et/ou décoller l'agglomérat et montée tournante sur le support via des moyens de rotation ; remarquable en ce que les moyens de rotation sont configurés pour générer un mouvement de rotation de la tête lorsqu'un effort est exercé sur et vers ladite tête notamment par application manuelle de la cavité de l'ustensile sur la tête.

La rotation de la tête peut être continue ou interrompue dans un sens donné ou encore dans les deux sens de manière alternative.

La tête peut tourner autour d'au moins un axe de rotation. Elle peut être reliée à un satellite lui-même en rotation par rapport au dispositif. En cas de pluralité d'axes de rotation, l'axe de rotation de la tête est celui qui permet à la tête de tourner sur elle-même.

L'effort est préférentiellement majoritairement ou essentiellement orienté vers le support.

L'ustensile comprend préférentiellement essentiellement une cavité et une poignée.

Selon un mode avantageux de l'invention, les moyens de rotation sont configurés pour permettre, en outre, un mouvement de translation de la tête et pour que ledit mouvement de translation génère le mouvement de rotation de ladite tête, lesdits moyens comprenant préférentiellement des moyens de guidage hélicoïdaux. De manière préférentielle, la rotation est exclusivement générée par le mouvement de translation de la tête, sans apport d'énergie autre que celle nécessaire à l'application de l'effort sur la tête via l'ustensile.

Selon un autre mode avantageux de l'invention, les moyens de rotation comprennent des moyens élastiques tendant à maintenir la tête à distance du support. De manière préférentiellement, la tête est maintenue dans une position haute par les moyens élastiques.

Selon un encore autre mode avantageux de l'invention, les moyens de rotation comprennent un arbre avec un profil hélicoïdal coopérant avec un profil fixe correspondant, la tige supportant la tête. L'arbre est préférentiellement en acier inoxydable.

Selon un encore autre mode avantageux de l'invention, les moyens élastiques agissent sur l'arbre de manière à contrer l'effort exercé sur et vers ladite tête et dirigé vers la tige et/ou le support.

Selon un encore autre mode avantageux de l'invention, les moyens de rotation comprennent un moteur électrique d'entrainement de la tête et des moyens de détection de l'effort appliqué aptes à actionner le moteur électrique.

Selon un encore autre mode avantageux de l'invention, le dispositif est configuré de manière à ce qu'en position de travail, l'axe de rotation de la tête soit généralement vertical, l'angle entre l'axe et la verticale étant préférentiellement inférieur à 20°, plus préférentiellement inférieur à 10°.

Le support comprend un réservoir ouvert avec la tête du dispositif disposée au-dessus de l'ouverture du réservoir de manière à ce que la majorité de l'agglomérat évacué par la rotation de la tête dans la cavité de l'ustensile tombe par gravité dans le réservoir. Le réservoir est préférentiellement en acier inoxydable.

Selon un encore autre mode avantageux de l'invention, le réservoir comprend une paroi latérale dont la section forme un contour généralement fermé et préférentiellement au moins essentiellement circulaire, le bord supérieur de ladite paroi formant l'ouverture et, préférentiellement, comprenant une découpe configurée pour permettre le passage d'une poignée de l'ustensile.

La découpe peut présenter une largeur moyenne comprise entre 5 et 15 cm, de manière à permettre le passage d'une poignée de l'ustensile et de la main de l'utilisateur saisissant la poignée. La découpe peut présenter différentes formes telles que notamment un forme généralement rectangulaire, ou encore trapézoïdale.

Selon un encore autre mode avantageux de l'invention, la découpe s'étend au moins sur la course du mouvement de translation de la tête. La course peut être comprise entre 3 cm et 30 cm, préférentiellement entre 5 cm et 20 cm.

Le réservoir comprend un fond amovible destiné à permettre la vidange en agglomérat du réservoir, les moyens de rotation étant préférentiellement solidaires avec la paroi latérale du réservoir. Le fond présente préférentiellement une portion de paroi latérale circulaire de manière à former une portion de cylindre fermé à son extrémité basse.

Selon un encore autre mode avantageux de l'invention, le fond forme une cavité apte à contenir l'agglomérat, la cavité présentant préférentiellement une hauteur d'au moins 5 cm, plus préférentiellement 8 cm.

Selon un encore autre mode avantageux de l'invention, le fond comprend des moyens de guidage par rapport au réservoir selon une direction transversale à la direction verticale, préférentiellement selon une direction au moins généralement horizontale, de manière à être amovible à la manière d'un tiroir.

Selon un encore autre mode avantageux de l'invention, la paroi latérale comprend, préférentiellement sur sa face extérieure et/ou sur sa moitié supérieure, des moyens de fixation aptes à permettre la fixation du dispositif à un plan de travail dans lequel le dispositif est encastré. Ces moyens de fixation peuvent comprendre des cornières ou pattes de fixation s'étendant généralement perpendiculairement à la paroi ou du moins à la génératrice de la paroi.

Selon un encore autre mode avantageux de l'invention, la tête comprend au moins une branche s'étendant radialement depuis l'axe de rotation de la tête.

Suivant un encore autre mode avantageux de l'invention, le dispositif comprend au moins quatre branches.

Selon un encore autre mode avantageux de l'invention, la ou les branches présente(nt) une partie supérieure généralement plane et verticale, préférentiellement la ou les branches ayant une section essentiellement en « T » inversé.

Les branches présentent préférentiellement des surfaces frontales de contact montées coulissantes, de manière à pouvoir se déplacer et se conformer à la forme du compartiment d'infusion.

Suivant un encore autre mode avantageux de l'invention, au moins une arrête supérieure est courbe.

Suivant une alternative de l'invention, les arrêtes supérieures sont droites et inclinées par rapport à l'axe de rotation de la tête. Cette particularité de l'invention autorise une imprécision d'orientation entre le dispositif et l'ustensile lorsque son fond est plan. La surface intérieure de l'ustensile pourra être raclée majoritairement malgré une erreur angulaire correspondant à l'inclinaison des bords supérieurs des branches.

Selon un encore autre mode avantageux de l'invention, la tête comprend au moins une brosse, préférentiellement plusieurs brosses réparties autour de l'axe de rotation de la tête.

### Avantages apportés

L'invention permet d'extraire de manière exhaustive un agglomérat tel qu'un agglomérat de café dans un porte-filtre, et de l'évacuer définitivement. La tête du dispositif est configurée pour oeuvrer lorsque l'ustensile est appliqué sur le dispositif. Le dispositif est de plus prévu configuré pour que l'ustensile soit présenté retourné, c'est-à-dire avec sa cavité orientée vers le bas, ce qui empêche tout retour de la matière formant l'agglomérat dans la cavité puisqu'il s'échappe gravitationnellement. La tête comprend des moyens de nettoyage qui permettent de chasser l'essentiel de l'agglomérat. Suivant les configurations de la tête, l'intégralité de la surface intérieure de la cavité de l'ustensile est raclée ou brossée pour la laisser à nu. Ainsi, le risque de pollution de la boisson par des restes précédents est écarté. Les branches de la tête exploitent la cohésion de l'agglomérat qui peut se détacher par blocs. Une fois décollés d'une paroi, ces blocs tendent à la laisser à nu. Cette particularité permet de soigner l'aspect de propreté de l'ustensile.

Le dispositif présente un réservoir qui permet de contenir le café après usage, et en même temps de former un carénage récoltant les projections vers le fond du réservoir. Cette particularité permet d'opérer l'évacuation de l'agglomérat de manière propre et rapide.

### Brève description des dessins

D'autres caractéristiques et avantages de la présente invention seront mieux compris à l'aide de la description donnée à titre d'exemple et en référence aux dessins parmi lesquels :
- la figure 1 représente un ustensile avec une cavité tel qu'un porte-filtre de machine à café, et le dispositif d'extraction selon l'invention.

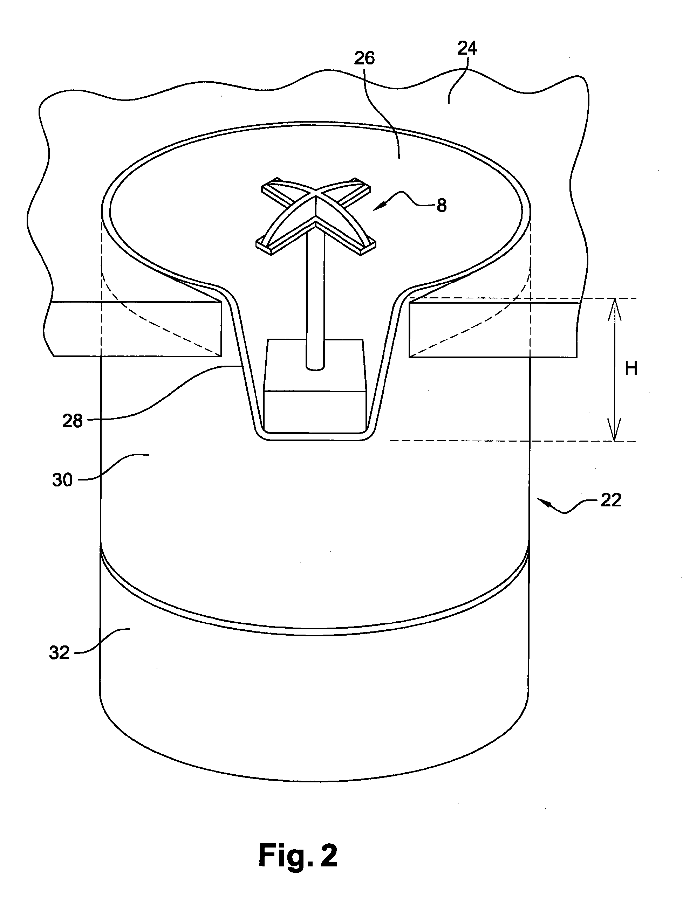

- la figure 2 illustre le dispositif d'extraction de la figure 1, pourvu d'un réservoir.

### Description des modes de réalisation

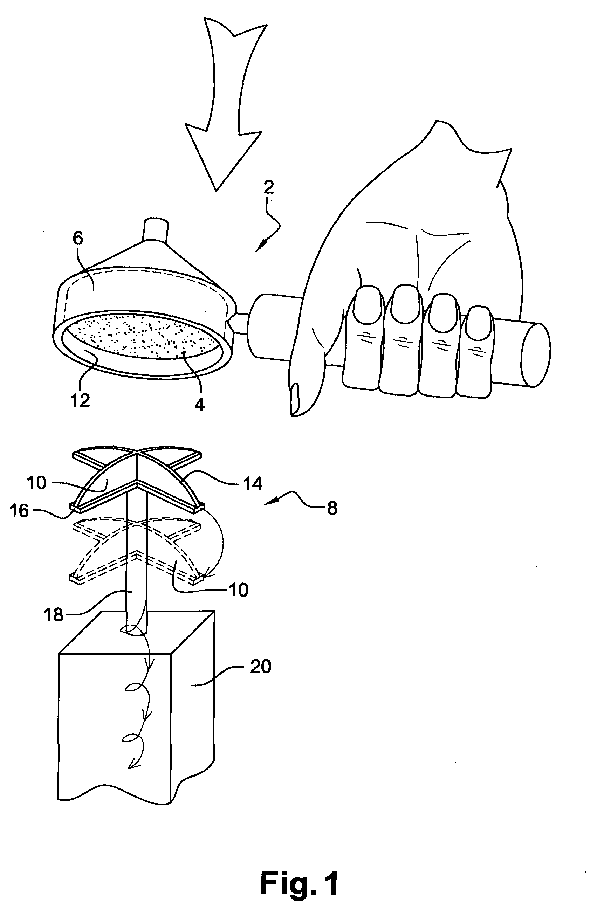

La figure 1 schématise un compartiment d'infusion 2 ayant servi à préparer un volume de boisson par infusion tel du café. Le compartiment d'infusion 2 est obstrué par un agglomérat 4 de café moulu faisant bloc. La figure 1 illustre le curetage du compartiment d'infusion 2 à l'aide de l'invention. Le compartiment d'infusion 2 peut également être utilisé pour toute boisson réalisée à partir d'une substance dont des principes sont extraits en contact d'un liquide ou de vapeur.

Le compartiment d'infusion 2 est une partie amovible d'une machine à café (non représentée). Il comprend une poignée et un porte-filtre 6 destiné à recevoir une dose de café moulu. La poignée facilite la manipulation du compartiment d'infusion car elle permet d'une seule main de le fixer sur la machine à café, et toujours avec cette même main, de la maintenir pendant que l'autre main le remplit d'une nouvelle dose de café. Couramment, la fixation du compartiment d'infusion 2 sur la machine à café s'effectue par l'intermédiaire d'un pas de vis dont l'engagement permet en parallèle de compacter le café moulu avec une force importante, ce qui influe sur les conditions d'extraction de l'agglomérat.

Le porte-filtre 6 forme une cavité renfermant une dose de café prédéfinie. La cavité est le lieu où s'effectue l'infusion au café en contact d'un liquide pour la préparation de la boisson. Le porte-filtre 6 a une forme généralement cylindrique. Dans son orientation d'infusion, orientation dans laquelle le compartiment d'infusion est fixé à la machine à café, le porte-filtre 6 présente une face supérieure ouverte et une face inférieure formant le filtre qui est généralement plane.

Sur la figure 1, le compartiment d'infusion 2 est représenté retourné, ou à l'envers par rapport à son orientation d'infusion. La face supérieure ouverte est en bas. Ici, la cohésion de l'agglomérat 4 de café après utilisation ne permet de bien vider le porte-filtre 6 que lorsque sa face ouverte est vers le bas. L'invention est avantageuse en ce qu'elle propose une tête tournante 8 apte à s'insérer dans la cavité du porte-filtre 6, et qui comprend des moyens de nettoyage qui frottent ou raclent l'agglomérat 4 de café. La tête 8 tourne autour d'au moins un axe de rotation 18. La tête peut être reliée à un satellite lui-même en rotation par rapport au dispositif.

Sous l'action mécanique des moyens de nettoyage, l'agglomérat 4 de café se détache progressivement ou subitement du porte-filtre 6. Suite à ce détachement, le café tombe de manière gravitationnelle. A mesure que la tête 8 tourne et s'enfonce vers le fond du porte-filtre 6, l'essentiel de l'agglomérat 4 de café quitte de manière irréversible le porte-filtre 6. L'évacuation du café aggloméré fractionné s'effectue à sens unique, de manière définitive. Suivant la configuration de l'invention, l'intégralité de l'agglomérat 4 de café est chassée de manière irréversible du porte-filtre. Ainsi, le porte-filtre 6 devient propre et prêt pour un nouvel usage sans risque que du café frais ne soit en contact avec du café usagé.

On aura bien compris que l'invention permet de vider exhaustivement et durablement la cavité de l'ustensile ou compartiment d'infusion 2. En particulier, l'orientation retournée de l'ustensile évite que du café fractionné ne retombe dedans. L'invention est également efficace lorsque le café a été particulièrement compressé mécaniquement avant infusion.

L'agencement des moyens de nettoyage de la tête permet d'améliorer l'efficacité de l'invention. Les moyens de nettoyage comprennent au moins une branche 10, préférentiellement plusieurs branches 10. Suivant un mode de réalisation avantageux de l'invention, les moyens de nettoyage comprennent quatre branches 10. Les branches 10 s'étendent parallèlement à l'axe de rotation de la tête 8. Les branches 10 sont essentiellement similaires et implantées à la même hauteur.

Les branches forment en leur partie supérieure un plan perpendiculaire à la direction de rotation. Les parties supérieures s'étendent radialement et verticalement. Les parties supérieures sont fines de manière à pénétrer l'agglomérat 6 de café compacté. Lorsqu'elles s'enfoncent, les parties supérieures fractionnent l'agglomérat en blocs. Puis, en tournant, elles arrachent ces blocs et provoquent leur chute libre. Les branches 10 peuvent exploiter la propriété de cohésion du café aggloméré. Décoller l'agglomérat par bloc permet de l'évacuer plus rapidement puisque la hauteur des blocs peut être supérieure à l'enfoncement des parties supérieures avant arrachement. De plus, décoller un bloc d'une surface intérieure 12 tend à laisser propre cette dernière puisque les grains restent collés au bloc et non à ladite surface.

Suivant la cohésion de l'agglomérat de café, l'action mécanique des moyens de nettoyage peuvent le réduire à l'état de poudre. Ces branches 10 forment alors des moyens mécaniques qui étrillent l'agglomérat de café.

Suivant un mode avantageux de l'invention, les branches 10 ont une section de « T » inversé. De la sorte, la base du « T » contribue à leur rigidification tangentielle. Les branches 10 peuvent être réalisées en matériaux polymères. Les branches 10 sont essentiellement rigides. Suivant une alternative de l'invention les branches sont essentiellement souples et d'une envergure sensiblement supérieure au diamètre intérieur du porte-filtre. Les branches se déforment de manière à pouvoir rentrer dans le porte-filtre et racler plus intensivement ses surfaces intérieures 12.

Au moins une branche 10, préférentiellement toutes les branches 10 présentent une arrête supérieure 14 courbe.

Alternativement, l'arrête supérieure 14 est droite et sensiblement inclinée par rapport à l'axe de rotation de la tête 8. Lorsque la tête 8 tourne, l'arrête supérieure 14 balaye la surface d'un cône, ce qui autorise une erreur d'orientation entre le porte-filtre 6 et l'axe de rotation de la tête 8. En manoeuvrant le porte-filtre, l'intégralité de l'agglomérat 4 de café peut être chassée.

Au moins une branche 10, préférentiellement toutes les branches 10 présentent à leur extrémité une pointe 16. Cette pointe 16 est destinée à racler le fond du coin circulaire inscrit formé entre une paroi horizontale et une paroi verticale du porte-filtre 6. Cette pointe 16 permet de vider les recoins où le café peut rester collé malgré un détachement par blocs de l'agglomérat 4.

Les moyens de nettoyage peuvent également comprendre des brosses à la place ou en complément des branches 10. Les brosses 10 peuvent être des brosses s'étendant radialement, réparties autour de l'axe de rotation de la tête 8. Les poils et la structures des brosses sont configurés pour rentrer dans le porte-filtre 6. Les poils frottent l'agglomérat 4 de café. Leur raideur est configurée pour désagréger l'agglomérat de café. Les brosses permettent à un certain stade de nettoyage de frotter directement les surfaces intérieures 12 et recoins du porte-filtre 6 afin d'en chasser chaque grain de café. Après cette friction, chaque grain tombe du porte-filtre 6 qui devient alors particulièrement vierge de tout café usagé.

Les branches peuvent présenter des surfaces frontales de contact montées coulissantes, de manière à pouvoir se déplacer et se conformer à la forme du compartiment d'infusion.

Le dispositif comprend des moyens de rotation qui permettent d'entrainer en rotation la tête 8. La tête est montée à l'extrémité supérieure d'un arbre 18 qui est relié au support 20 du dispositif à l'aide de roulements, de paliers ou de tout autre moyen équivalent. Les moyens de rotation comprennent des moyens d'actionnement qui permettent de commander la rotation de l'arbre 18 sur lequel est montée la tête 8.

Les moyens d'actionnement comprennent avantageusement une liaison hélicoïdale. La liaison hélicoïdale relie l'arbre 18 au support 20 du dispositif. Les liaisons hélicoïdales sont bien connues de l'homme du métier et ne seront pas développées plus avant. Le pas de la liaison hélicoïdale est supérieur à la moitié de l'envergure de la tête 8, l'envergure étant la largeur maximale que présente la tête. Préférentiellement, le pas de la liaison hélicoïdale est supérieur à l'envergure de la tête 8. Choisir un tel pas réduit les frictions dans la liaison hélicoïdale et facilite la conversion d'un effort exercé axialement sur l'arbre 18 en un mouvement de rotation de cet arbre 18. Le pas correspond à la distance sur laquelle l'arbre 18 se déplace en translation lorsqu'il effectue une rotation d'un tour sur lui-même.

Cependant, un pas trop grand réduit la rotation totale de la tête pour une translation donnée, et réduit son efficacité tant ses branches 10 balayeront moins intensivement la surface intérieure 12 du porte-filtre 6. A l'extrême, certaines portions de la surface intérieure 12 ne seront pas balayées. Pour cette raison, le pas est choisi en fonction de la course de translation de la liaison hélicoïdale et du nombre de branches 10. Cette rotation permise par la liaison hélicoïdale doit être supérieure à une fraction de tour, cette fraction étant l'inverse du nombre de branches 10. Ramené à la liaison hélicoïdale, le pas doit être inférieur à l'inverse du nombre de branches multiplié par la course permise par la liaison hélicoïdale. Le pas peut également être déterminé à partir du nombre de brosses en effectuant un raisonnement similaire.

Le dispositif comprend en outre des moyens de rappel permettant de ramener la tête 8 en position haute. Les moyens de rappel peuvent être un ressort. La raideur des moyens de rappel permettent en outre d'exercer un effort résistant à la descente du porte-filtre 2. L'effort résistant permet également d'augmenter la pénétration des moyens de nettoyage dans l'agglomérat 4 de café. Grâce aux moyens de rappel, le dispositif devient également actif lorsque la tête 8 remonte, ce qui améliore son efficience.

Cette solution est avantageuse car elle permet de fonctionner automatiquement en exploitant les sources d'énergie disponibles, à savoir la force de l'utilisateur. D'une seule main, l'utilisateur peut actionner le dispositif par l'intermédiaire du compartiment d'infusion 2. En effectuant un mouvement de va et vient vertical, il fait tourner la tête 8 du dispositif et évacue l'agglomérat 4 de café. Cette opération s'effectue rapidement et procure une efficacité adéquate au domaine de la préparation de boissons. Suivant les configurations des moyens de nettoyage, l'utilisateur peut se dispenser d'une étape de contrôle du résultat.

Suivant un mode alternatif de réalisation de l'invention, les moyens de rotation peuvent comprendre un moteur. Les moyens de commande peuvent comprendre une pédale. Suivant cette alternative de réalisation de l'invention, les moyens de commande peuvent comprendre un capteur d'effort couplé à la tête 8 qui détecte les efforts appliqués sur la tête 8. Si un utilisateur appuie à l'aide du porte-filtre 2 sur la tête 8, cette dernière tournera et ses moyens de nettoyage évacueront l'agglomérat 4 de café grâce à ses cloisons.

Le dispositif est par exemple destiné à être utilisé dans un débit de boisson. La propreté de ce lieu doit être préservée indépendamment des boissons qui y sont préparées. Pour cette raison, le dispositif est doté d'un réservoir 22 qui stocke l'agglomérat 4, et qui permet de plus de le recueillir dans sa chute. Suivant la vitesse de rotation de la tête 8 le café est projeté et risque d'atteindre l'environnement du dispositif. Le réservoir 22 permet d'intercepter les projections de café.

Le réservoir 22 est destiné à être inséré dans une découpe réalisée dans un plan de travail 24, à côté d'une machine à café. Le réservoir 22 fait également office de carénage qui enveloppe les parties mobiles du dispositif. Il encercle la tête 8 tout le long de sa course. Le réservoir 22 a une forme qui s'étend selon la direction de translation de la liaison hélicoïdale. Le réservoir 22 a une forme générale de profilé cylindrique orienté verticalement. Sa face inférieure est fermée par une cloison inférieure de manière à clore un volume de stockage en combinaison avec la paroi du cylindre.

Le réservoir 22 présente une ouverture 26. L'ouverture 26 est ménagée sur sa moitié supérieure. L'ouverture 26 donne accès à la tête 8 par le dessus, et permet en particulier de la recouvrir avec le porte-filtre 6. Le niveau moyen de l'ouverture 26 est réalisé à une hauteur qui est essentiellement au niveau du sommet de la tête 8, le niveau moyen de l'ouverture 26 correspond à l'altitude du centre de gravité d'une surface délimitée par le contour de l'ouverture 26. Préférentiellement, le niveau moyen de l'ouverture 26 est au-dessus du sommet de la tête 8 pour réduire le risque que des projections de café ne s'échappent du réservoir 22.

L'ouverture 26 comprend une fenêtre ou découpe 28 qui s'étend depuis le niveau de la tête 8 lorsqu'elle est en position haute, vers la position basse de la tête 8 sur une hauteur H supérieure ou égale à la course de la liaison hélicoïdale. Cette fenêtre 28 permet en outre l'insertion du manche du porte-filtre 2 et éventuellement d'une main qui le tient. La largeur de la fenêtre 28 est réduite afin de limiter le risque que des projections de café ne salissent l'entourage du dispositif.

Le réservoir 22 comprend une partie fixe 30 à laquelle sont reliés le support 20 (figure 1) et la tête 8, et une partie amovible 32 qui permet de vider le réservoir 22. La partie amovible 32 peut être une trappe donnant accès au volume de stockage de café usagé. Suivant un mode préféré de l'invention, la partie amovible 32 est une partie inférieure du réservoir qui délimite également un volume de stockage. Lorsque cette partie inférieure amovible 32 est détachée du reste du réservoir 22, elle permet d'emmener l'amas de café usagé. Préférentiellement, la partie inférieure amovible 32 renferme au moins la moitié du volume de stockage du réservoir 22.

Le réservoir et l'arbre sont préférentiellement en acier inoxydable, notamment en raison des contraintes sanitaires.

## Revendications

1. Dispositif d'évacuation d'un agglomérat (4) présent dans la cavité (6) d'un ustensile tel qu'un compartiment d'infusion (2) d'une machine à café, comprenant :
un support (20) ; et
une tête (8) apte à fragmenter et/ou décoller l'agglomérat (4) et montée tournante sur le support via des moyens de rotation (18)
dans lequel
les moyens de rotation (18) sont configurés pour générer un mouvement de rotation de la tête (8) lorsqu'un effort est exercé sur et vers ladite tête (8) notamment par application manuelle de la cavité (6) de l'ustensile (2) sur la tête, et **caractérisé en ce que**
le support (20) comprend un réservoir ouvert (22), la tête (8) est disposée au-dessus de l'ouverture (26) du réservoir (22), et **en ce que** le réservoir (22) comprend un fond amovible (32) destiné à permettre la vidange en matière de l'agglomérat du réservoir, dans lequel la majorité de l'agglomérat (4), évacué par la rotation de la tête (8) dans la cavité de l'ustensile, tombe par gravité.

2. Dispositif selon la revendication 1, **caractérisé en ce que** les moyens de rotation (18) sont configurés pour permettre, en outre, un mouvement de translation de la tête (8) et pour que ledit mouvement de translation génère le mouvement de rotation de ladite tête, lesdits moyens comprenant préférentiellement des moyens de guidage hélicoïdaux, les moyens de rotation (18) comprenant des moyens élastiques tendant à maintenir la tête à distance du support.

3. Dispositif selon la revendication 2, **caractérisé en ce que** les moyens de rotation comprennent un arbre (18) avec un profil hélicoïdal coopérant avec un profil fixe correspondant, la tige supportant la tête, les moyens élastiques agissant sur la tige de manière à contrer l'effort exercé sur et vers ladite tête et dirigé vers l'arbre (18) et/ou le support (20, 22).

4. Dispositif selon la revendication 1, **caractérisé en ce que** les moyens de rotation comprennent un moteur électrique d'entrainement de la tête et des moyens de détection de l'effort appliqué aptes à actionner le moteur électrique.

5. Dispositif selon l'une des revendications 1 à 4, **caractérisé en ce qu'il** est configuré de manière à ce qu'en position de travail, l'axe de rotation de la tête (8) soit généralement vertical, l'angle entre l'axe et la verticale étant préférentiellement inférieur à 20°, plus préférentiellement inférieur à 10°.

6. Dispositif selon l'une des revendications 1 à 5, **caractérisé en ce que** le réservoir (22) comprend une paroi latérale (30) dont la section forme un contour généralement fermé et préférentiellement au moins essentiellement circulaire, le bord supérieur de ladite paroi formant l'ouverture (26) et, préférentiellement, comprenant une découpe (28) configurée pour permettre le passage d'une poignée de l'ustensile (2).

7. Dispositif selon l'une des revendications 2 et 3 et la revendication 6, **caractérisé en ce que** la découpe (28) s'étend au moins sur la course du mouvement de translation de la tête (8).

8. Dispositif selon l'une des revendications 6 à 7, caractérisé en ce les moyens de rotation sont solidaires avec la paroi latérale (30) du réservoir.

9. Dispositif selon l'une des revendications 1 à 8, **caractérisé en ce que** le fond (32) forme une cavité apte à contenir l'agglomérat, la cavité présentant préférentiellement une hauteur d'au moins 5 cm, plus préférentiellement 8 cm.

10. Dispositif selon l'une des revendications 1 à 9, **caractérisé en ce que** le fond comprend des moyens de guidage par rapport au réservoir selon une direction transversale à la direction verticale, préférentiellement selon une direction au moins généralement horizontale, de manière à être amovible à la manière d'un tiroir.

11. Dispositif selon l'une des revendications 6 à 10, **caractérisé en ce que** la paroi latérale (30) comprend, préférentiellement sur sa face extérieure et/ou sur sa moitié supérieure, des moyens de fixation aptes à permettre la fixation du dispositif à un plan de travail dans lequel le dispositif est encastré.

12. Dispositif selon l'une des revendications 1 à 11, **caractérisé en ce que** la tête comprend au moins une branche (10) s'étendant radialement depuis l'axe de rotation de la tête (8).

13. Dispositif selon la revendication 12, **caractérisé en ce que** la ou les branches (10) présente(nt) une partie supérieure généralement plane et verticale, préférentiellement la ou les branches (10) ayant une section essentiellement en « T » inversé.

14. Dispositif selon l'une des revendications 1 à 13, **caractérisé en ce que** la tête comprend au moins une brosse, préférentiellement plusieurs brosses réparties autour de l'axe de rotation de la tête (8).

## Patentansprüche

1. Vorrichtung für die Beseitigung eines Agglomerats (4) aus dem Hohlraum (6) eines Utensils, wie z.B. eines Siebträgers (2) einer Kaffeemaschine, mit:
einem Halter (20); und
einem Kopf (8), der in der Lage ist, das Agglomerat (4) zu zerkleinern und/oder abzulösen und anhand von Rotationsmitteln (18) drehbar auf dem Halter angebracht ist,
bei dem
die Rotationsmittel (18) so konfiguriert sind, dass sie eine Drehbewegung des Kopfes (8) bewirken, wenn auf den genannten Kopf (8) und in dessen Richtung eine Kraft ausgeübt wird, insbesondere indem der Hohlraum (6) des Siebträgers (2) manuell auf den Kopf gedrückt wird, **dadurch gekennzeichnet, dass** der Halter (20) einen offenen Behälter (22) beinhaltet, der Kopf (8) über der Öffnung (26) des Behälters (22) angeordnet ist und der Behälter (22) einen abnehmbaren Boden (32) besitzt, um das Ausleeren des Agglomerats aus dem Behälter zu ermöglichen, in den der größte Teil des Agglomerats (4), der durch Rotation des Kopfes (8) aus dem Hohlraum des Siebträgers entfernt worden ist, per Schwerkraft fällt.

2. Vorrichtung nach Anspruch 1, **dadurch gekennzeichnet, dass** die Rotationsmittel (18) so konfiguriert sind, dass sie außerdem eine Translationsbewegung des Kopfes (8) ermöglichen und die genannte Translationsbewegung die Rotationsbewegung des genannten Kopfes erzeugen, wobei die genannten Mittel vorzugsweise schraubenförmige Führungsmittel beinhalten und die Rotationsmittel (18) elastische Mittel beinhalten, um den Kopf vom Halter auf Abstand zu halten.

3. Vorrichtung nach Anspruch 2, **dadurch gekennzeichnet, dass** die Rotationsmittel eine Welle (18) mit einem schraubenförmigen Profil beinhalten, die mit einem entsprechenden feststehenden Profil zusammenwirken, sowie den Stab, der den Kopf trägt und die elastischen Mittel, die auf den Stab einwirken, um der Kraft entgegenzuwirken, die auf den genannten Kopf und in Richtung des genannten Kopfes ausgeübt wird und in Richtung Welle (18) und/oder Halter (20, 22) gerichtet ist.

4. Vorrichtung nach Anspruch 1, **dadurch gekennzeichnet, dass** die Rotationsmittel einen Elektromotor für den Antrieb des Kopfes und Mittel für die Feststellung der ausgeübten Kraft beinhalten, die in der Lage sind, den Elektromotor zu betätigen.

5. Vorrichtung nach einem der Ansprüche 1 bis 4, **dadurch gekennzeichnet, dass** sie so konfiguriert ist, dass die Rotationsachse des Kopfes (8) in Arbeitsposition im allgemeinen senkrecht ausgerichtet ist und der Winkel zwischen der Achse und der Vertikalen vorzugsweise weniger als 20° und noch besser weniger als 10° beträgt.

6. Vorrichtung nach einem der Ansprüche 1 bis 5, **dadurch gekennzeichnet, dass** der Behälter (22) eine Seitenwand (30) besitzt, deren Querschnitt eine allgemein geschlossene und vorzugsweise im Wesentlichen runde Kontur bildet, wobei der obere Rand der genannten Seitenwand die Öffnung (26) bildet und vorzugsweise einen Ausschnitt (28) aufweist, der so konfiguriert ist, dass er Platz für den Handgriff eines Siebträgers (2) bietet.

7. Vorrichtung nach einem der Ansprüche 2 und 3 und nach Anspruch 6, **dadurch gekennzeichnet, dass** sich der Ausschnitt (28) mindestens über den Arbeitsweg der Translationsbewegung des Kopfes (8) erstreckt.

8. Vorrichtung nach einem der Ansprüche 6 bis 7, **dadurch gekennzeichnet, dass** die Rotationsmittel fest mit der Seitenwand (30) des Behälters verbunden sind.

9. Vorrichtung nach einem der Ansprüche 1 bis 8, **dadurch gekennzeichnet, dass** der Boden (32) einen Hohlraum bildet, der in der Lage ist, das Agglomerat aufzunehmen, wobei der Hohlraum vorzugsweise eine Höhe von mindestens 5 cm und noch besser von 8 cm besitzt.

10. Vorrichtung nach einem der Ansprüche 1 bis 9, **dadurch gekennzeichnet, dass** der Boden Führungsmittel besitzt, die im Verhältnis zum Behälter in einer Richtung verlaufen, die seitwärts zur senkrechten Richtung verläuft, vorzugsweise in einer allgemein horizontalen Richtung, um in Form einer Schublade abnehmbar zu sein.

11. Vorrichtung nach einem der Ansprüche 6 bis 10, **dadurch gekennzeichnet, dass** die Seitenwand (30) vorzugsweise auf ihrer Außenseite und/oder in ihrer oberen Hälfte Befestigungsmittel aufweist, um die Befestigung der Vorrichtung an einer Arbeitsfläche zu ermöglichen, in welche die Vorrichtung eingelassen wird.

12. Vorrichtung nach einem der Ansprüche 1 bis 11, **dadurch gekennzeichnet, dass** der Kopf mindestens einen Seitenarm (10) aufweist, der sich von der Rotationsachse des Kopfes (8) aus radial erstreckt.

13. Vorrichtung nach Anspruch 12, **dadurch gekennzeichnet, dass** der oder die Seitenarm(e) (10) einen oberen Teil besitzen, der im Allgemeinen flach und senkrecht verläuft und worin der oder die Seitenarme (10) vorzugsweise einen Querschnitt aufweisen, der einem umgekehrten "T" entspricht.

14. Vorrichtung nach einem der Ansprüche 1 bis 13, **dadurch gekennzeichnet, dass** der Kopf mindestens eine Bürste und vorzugsweise mehrere Bürsten aufweist, die um die Rotationsachse des Kopfes (8) herum angeordnet sind.

## Claims

1. Device for discharging an agglomerate (4) from the chamber (6) of a utensil such as an infusion chamber (2) of a coffee machine, comprising:
a support (20); and
a head (8) designed to loosen and/or break up the agglomerate (4) rotatably mounted on the support through means of rotation (18)
wherein
the means of rotation (18) are designed to generate a rotational movement of the head (8) when a force is exerted on and towards the said head (8) in particular by manually pressing the chamber (6) of the utensil (2) onto the head, wherein the support (20) includes an open container (22), the head (8) is arranged above the opening (26) of the container (22), and wherein the container (22) comprises a removable base (32) into which the majority of the agglomerate (4) falls by gravity, having been discharged by the rotation of the head (8) in the chamber of the utensil, the base enabling the agglomerate material in the container to be emptied.

2. Device in accordance with Claim 1, wherein the means of rotation (18) are designed to enable, in addition, a translational movement of the head (8) so that the said translational movement generates the rotational movement of the said head, the said means preferably comprising means of helical guidance, the means of rotation (18) comprising elastic means tending to keep the head away from the support.

3. Device in accordance with Claim 2, wherein the means of rotation comprise a shaft (18) with a helical profile mating with a corresponding fixed profile, the rod supporting the head, the elastic means acting on the rod to counteract the force exerted on and towards the said head and directed towards the shaft (18) and/or the support (20, 22).

4. Device in accordance with Claim 1, wherein the means
of rotation comprise an electric motor drive on the head and means for detecting the applied force, designed to actuate the electric motor.

5. Device in accordance with one of Claims 1 to 4, wherein the design is such that, in the working position, the axis of rotation of the head (8) is generally vertical, the angle between the axis and the vertical preferably being less than 20°, more preferably less than 10°.

6. Device in accordance with one of Claims 1 to 5, wherein the container (22) comprises a side wall (30) whose section has a generally closed and preferably at least substantially circular shape, the upper edge of the said wall forming the opening (26) and preferably comprising a recess (28) designed to allow a handle of the utensil (2) to pass through.

7. Device in accordance with one of Claims 2 and 3 and Claim 6, wherein the recess (28) extends at least over the length of the translational movement of the head (8).

8. Device in accordance with one of Claims 6-7, wherein the means of rotation are integral with the side wall (30) of the container.

9. Device in accordance with one of Claims 1 to 8, wherein the base (32) forms a cavity suitable for containing the agglomerate, the cavity preferably having a height of at least 5 cm, more preferably 8 cm.

10. Device in accordance with one of Claims 1 to 9, wherein the base includes means of guidance relative to the container in a direction transverse to the vertical direction, preferably in a direction at least generally horizontal so as to make it removable as if it were a drawer.

11. Device in accordance with one of Claims 6 to 10, wherein the side wall (30) comprises, preferably on its outer side and/or on its upper half, fastening means capable of allowing the device to be fixed to a worktop into which the device is countersunk.

12. Device in accordance with one of Claims 1 to 11, wherein the head comprises at least one arm (10) extending radially outward from the axis of rotation of the head (8).

13. Device in accordance with Claim 12, wherein the arm or arms (10) has (have) an upper part that is generally planar and vertical, the arm or arms preferably (10) having a substantially inverted T-shaped section.

14. Device in accordance with one of Claims 1 to 13, wherein the head comprises at least one brush, preferably several brushes, distributed around the axis of rotation of the head (8)
